# EUROPÄISCHE PATENTSCHRIFT

(11) **EP 4 007 025 B1**
(45) Veröffentlichungstag und Bekanntmachung des Hinweises auf die Patenterteilung: **23.04.2025**
(21) Anmeldenummer: 21205295.5
(22) Anmeldetag: 28.10.2021
(51) Int. Cl.: H01M 10/04

(54) **VERFAHREN ZUR HERSTELLUNG EINER BATTERIEZELLE**
METHOD FOR PRODUCING A BATTERY CELL
PROCÉDÉ DE FABRICATION D'UN ÉLÉMENT DE BATTERIE

(30) Priorität: 25.11.2020 DE 102020214832
(43) Veröffentlichungstag der Anmeldung: 01.06.2022
(73) Patentinhaber: PowerCo SE, 38239 Salzgitter (DE)
(72) Erfinder: JAMADAR, Kartik, 38442 Wolfsburg (DE); THEUERKAUF, Christian, 38114 Braunschweig (DE)
(74) Vertreter: FDST Patentanwälte

(56) Entgegenhaltungen:
- CN-A- 110 224 176
- DE-A1- 102019 106 988
- DE-A1- 102019 111 410

## Beschreibung

Die Erfindung betrifft ein Verfahren zur Herstellung einer Batteriezelle, beispielsweise zur Herstellung einer Pouchzelle, aufweisend einen Elektrodenstapel mit einer Anzahl von ersten und zweiten Stromableitern. Die Erfindung betrifft weiterhin eine Vorrichtung zur Durchführung des Verfahrens sowie eine Batteriezelle.

Elektrisch beziehungsweise elektromotorisch angetriebene oder antreibbare Kraftfahrzeuge, wie beispielsweise Elektro- oder Hybridfahrzeuge, umfassen in der Regel einen Elektromotor, mit dem eine oder beide Fahrzeugachsen antreibbar sind. Zur Versorgung mit elektrischer Energie ist der Elektromotor üblicherweise an eine fahrzeuginterne (Hochvolt-)Batterie als elektrischen Energiespeicher angeschlossen.

Unter einer insbesondere elektrochemischen Batterie ist hier und im Folgenden insbesondere eine sogenannte sekundäre Batterie (Sekundärbatterie) des Kraftfahrzeugs zu verstehen. Bei einer solchen (sekundären) Fahrzeugbatterie ist eine verbrauchte chemische Energie mittels eines elektrischen (Auf-)Ladevorgangs wiederherstellbar. Derartige Fahrzeugbatterien sind beispielsweise als elektrochemische Akkumulatoren, insbesondere als Lithium-Ionen-Akkumulatoren, ausgeführt. Zur Erzeugung oder Bereitstellung einer ausreichend hohen Betriebsspannung weisen solche Fahrzeugbatterien typischerweise mindestens ein Batteriezellmodul auf, bei welchem mehrere einzelne Batteriezellen modular verschaltet sind.

Die Batteriezellen sind beispielsweise als elektrochemische (Dünn-)Schichtzellen ausgeführt. Die Dünnschichtzellen weisen einen geschichteten Aufbau mit einer Kathodenschicht (Kathode) und mit einer Anodenschicht (Anode) sowie mit einer dazwischen eingebrachten Separatorschicht (Separator) auf. Diese Bestandteile werden beispielsweise von einem flüssigen Elektrolyt (Flüssigelektrolyt) durchdrungen, welcher eine ionenleitfähige Verbindung der Bestandteile beziehungsweise einen Ladungsausgleich erzeugt.

Zur Herstellung von Batteriezellen wird beispielsweise eine Aktivmaterial- oder Elektrodenmaterialschicht, auf einen Stromableiter aufgetragen. Die Stromableiter sind hierbei häufig als Metallfolien ausgeführt, wobei typischerweise Kupferfolien für die Anodenschichten und Aluminiumfolien für die Kathodenschichten eingesetzt werden. Derart beschichtete Stromableiter werden als gestapelte Elektroden (Elektrodenstapel) verwendet. Die Stromableiter des Elektroden- oder Zellenstapels werden miteinander zu einer gemeinsamen Anode und einer gemeinsamen Kathode, welche nachfolgend auch als Stromsammler oder Kollektoren bezeichnet werden, elektrisch kontaktiert.

Das Verbinden der einzelnen Ableiterfähnchen oder Stromableiter erfolgt in der Regel durch Laser- oder Ultraschallschweißen.

Nachteiligerweise treten beim Ultraschallschweißen jedoch (mechanische) Vibrationen auf, welche eine Toleranzunwucht des Stapels und auch eine Verformung oder Deformation der (Strom-)Ableiterfolien verursachen können. Daher ist es beispielsweise notwendig, Verspanneinheiten für die Elektrodenstapel einzusetzen, um die Vibrationen zu verhindern oder zumindest zu reduzieren. Des Weiteren ist Ultraschallschweißen ist stark abhängig von der Oberflächenqualität des Kollektors. So kann ein Vorhandensein von Oxid, Feuchtigkeit, Schmutz oder einem Ölfilm die Qualität der Schweißverbindung wesentlich verschlechtern.

Nachteiligerweise wird bei einem Laserschweißen ein Teil des Lichtstrahles von der Metalloberfläche der Stromableiter reflektiert, wodurch der Wirkungsgrad reduziert wird. Um das Material beim Laserschweißen zum Schmelzen zu bringen ist daher ein hoher Eintrag an Energie notwendig. Laserschweißen ist somit ein vergleichsweise energieintensives Verfahren. Es schmilzt den Kollektor wie Kupfer und Aluminium, die (thermisch) hochleitende Materialien sind. Die beim Schweißen entstehende Wärme kann somit auf das aktive Material übertragen werden und führt auch zu einer Zone mit hoher Wärmeeinwirkung am Kollektor.

Des Weiteren wird beim Laserschweißen lediglich eine kleine Fläche des Kollektors mit einer Liniennaht verschweißt. Andere Bereiche des Kollektors werden nicht geschweißt. Da somit lediglich lokal geschweißt wird, kommt es in diesem Bereich zu einer schnelleren Erwärmung, da im Betrieb alle Elektronen des Batteriestroms beim Eintritt oder Austritt aus der Elektrode durch diesen Schweißnahtbereich hindurchströmen.

Weiterhin wird im Zuge des Laserschweißprozesses das Material des Kollektors aufgeschmolzen und es kommt zu einer Bildung von Oxidpartikeln, welche eine Oxidschicht bewirken, welche die Leitfähigkeit der Schweißverbindung nachteilig reduziert. Der Widerstand in der Laserschweißnaht ist somit häufig um ein Vielfaches höher als der Widerstand des Kollektormaterials (Kupfer oder Aluminium). Dies bedeutet, dass im Bereich der Laserschweißnaht ein vergleichsweise hoher (ohmscher) Leistungsverlust auftritt.

Aus der DE 10 2014 226 806 B3 ist ein Verfahren zur Herstellung einer elektrisch leitenden Verbindung bekannt, bei welchem die Oberflächen der Fügepartner gereinigt und anschließend mit einem adhäsiv wirkenden Polymer beschichtet werden. Die beschichteten Fügepartner werden hernach während eines Aushärtevorgangs der Polymerschichten mechanisch zusammengepresst, wobei es aufgrund von Oberflächenunebenheiten der Fügepartner zur Ausbildung von elektrisch leitenden Mikrokontakten zwischen den Fügepartnern im Fügebereich kommt.

In der DE 10 2019 111 410 A1 ist ein Verfahren zum reaktionsmetallurgischen Schweißen offenbart. Das Schweißverfahren beinhaltet das Bereitstellen eines reaktiven Materials zwischen und in Kontakt mit einem ersten und zweiten Werkstück. In einer ersten Position werden die Werkstücke und das reaktive Material zusammengepresst, erwärmt und zwischen ersten und zweiten Werkzeugen gehalten, um eine erste RMJ-Schweißverbindung zwischen den Werkstücken zu bilden. Anschließend werden die Werkstücke in einer zweiten Position zusammengepresst, erwärmt und zwischen den Werkzeugen gehalten, um eine zweite RMJ-Schweißverbindung zu bilden, die mit der ersten RMJ-Schweißverbindung überlappt.

Die CN 110 224 176 A offenbart ein Herstellungsverfahren für eine Sekundärbatterie. Die Sekundärbatterie hat eine positive Platte mit einer positiven aktiven Substanzschicht, die auf dem positiven Kern ausgebildet ist, und einen positiven Kollektor, der mit dem positiven Kern verbunden ist, und der laminierte positive Kern hat einen Verbindungsteil, der mit dem positiven Kollektor verbunden ist, und wenn das Produkt aus der Dicke eines Stücks des Teils des positiven Kerns, der nicht mit dem positiven Kollektor verbunden ist, und der Anzahl der Schichten des positiven Kerns in dem Verbindungsteil auf Tp1 gesetzt wird, hat der Verbindungsteil einen ersten Bereich mit einer Dicke kleiner als Tp1 und einen zweiten Bereich mit einer Dicke größer als Tp1 in der Laminierungsrichtung des positiven Kerns.

In der DE 10 2019 106 988 A1 ist eine Stapelanordnung beschrieben, die eine Batterielasche mit einer lokalisierten Schweißnaht aufweist, sowie ein Verfahren zu deren Herstellung. Die Anordnung wird durch ein Verfahren hergestellt, das die Schritte des Anordnens einer Vielzahl von Batterielaschen in eine Stapelanordnung, des Bereitstellens einer Widerstandsbeschichtung auf mindestens einer der Innenflächen und den Außenflächen der Batterielaschen und des Widerstandserwärmens der Stapelanordnung beinhaltet. Die Widerstandsbeschichtung ist eine Nickel-Phosphor-(Ni-P)-Legierung mit einem Phosphorgehalt von 5 bis 7 Gew.-%. Die Widerstandserwärmung beinhaltet das Reagieren der Ni-P-Legierung mit einem elektrischen Strom, um konzentrierte Wärme zu erzeugen, die zwischen angrenzenden Batterielaschen lokalisiert ist, sodass die Ni-P-Legierung eine Festkörperbindung mit dem Cu in der ersten Lasche durchläuft.

Der Erfindung liegt die Aufgabe zugrunde, ein besonders geeignetes Verfahren zur Herstellung einer Batteriezelle anzugeben. Insbesondere soll eine einfache und zuverlässige Fügeverbindung der Kollektoren ermöglicht werden, welche vorzugsweise einen niedrigen elektrischen Widerstand aufweist. Der Erfindung liegt weiterhin die Aufgabe zugrunde, eine besonders geeignete Vorrichtung zur Durchführung des Verfahrens sowie eine besonders geeignete Batteriezelle anzugeben.

Hinsichtlich des Verfahrens wird die Aufgabe mit den Merkmalen des Anspruchs 1 und hinsichtlich der Vorrichtung 9 sowie hinsichtlich der Batteriezelle mit den Merkmalen des Anspruchs 11 erfindungsgemäß gelöst. Vorteilhafte Ausgestaltungen und Weiterbildungen sind Gegenstand der jeweiligen Unteransprüche.

Sofern nachfolgend Verfahrensschritte beschrieben werden, ergeben sich vorteilhafte Ausgestaltungen für die Vorrichtung insbesondere dadurch, dass diese ausgebildet ist, einen oder mehrere dieser Verfahrensschritte auszuführen.

Das erfindungsgemäße Verfahren ist zur Herstellung einer Batteriezelle vorgesehen, sowie dafür geeignet und ausgestaltet. Die Batteriezelle ist hierbei insbesondere eine Pouch-, Beutel- oder Softpackzelle. Die Batteriezelle weist ein Zellengehäuse und einen darin aufgenommenen Elektrodenstapel mit einer Anzahl von ersten und zweiten Stromableitern auf.

Der Elektrodenstapel weist eine Anzahl von übereinander gestapelt angeordneten Dünnschichtzellen mit einer Kathodenschicht und mit einer Anodenschicht sowie mit einer dazwischen eingebrachten Separatorschicht (Separator) auf. Hierbei ist beispielsweise eine Aktivmaterial- oder Elektrodenmaterialschicht auf die Stromableiter aufgetragen. Die Stromableiter sind beispielsweise als Metallfolien ausgeführt, wobei geeigneterweise Kupferfolien für die Anodenschichten und Aluminiumfolien für die Kathodenschichten eingesetzt werden. Vorzugsweise werden hierbei hoch siliziumbasierte Anodenschichten verwendet, um eine Batteriezelle mit möglichst hoher Leistungsdichte zu realisieren sowie andererseits eine Schnellladung der Batteriezelle zu ermöglichen. Nachfolgend sind unter den ersten Stromableitern insbesondere Aluminiumfolien und unter den zweiten Stromableitern insbesondere Kupferfolien zu verstehen.

Verfahrensgemäß werden die ersten Stromableiter zu einer gemeinsamen Kathode und die zweiten Stromableiter zu einer gemeinsamen Anode schmelzfrei stoffschlüssig gefügt, insbesondere werden hierbei Ableiterfahnen (Elektrodenableiterfähnchen) der Stromableiter gefügt. Unter "schmelzfrei" oder "schmelzenfrei" wird hierbei insbesondere ein stoffschlüssiges Fügen verstanden, ohne dass dabei einer oder beide Fügepartner in eine Schmelzphase übergehen. Dies bedeutet, dass die Fügepartner im Zuge des Fügens möglichst nicht aufgeschmolzen werden.

Unter einem "Stoffschluss" oder einer "stoffschlüssigen Verbindung" zwischen wenigstens zwei miteinander verbundenen Teilen wird hier und im Folgenden insbesondere verstanden, dass die miteinander verbundenen Teile an Ihren Kontaktflächen durch stoffliche Vereinigung oder Vernetzung (beispielsweise aufgrund von atomaren oder molekularen Bindungskräften) gegebenenfalls unter Wirkung eines Zusatzstoffs zusammengehalten werden.

Erfindungsgemäß werden die ersten und zweiten Stromableiter mittels Festkörperschweißen zu der Kathode und Anode gefügt. Unter "Festkörperschweißen" oder einem "Festkörperschweißverfahren" ist insbesondere ein Fügeverfahren zu verstehen, bei welchem die Fügeverbindung durch Anwendung von Druck allein oder durch eine Kombination von Wärme und Druck entsteht. Wenn Wärme eingesetzt wird, liegt die Temperatur bei diesem Verfahren unter dem Schmelzpunkt oder der Schmelztemperatur der zu schweißenden Metalle (Warmdiffusionsschweißen). Weiterhin wird kein Zusatzwerkstoff verwendet.

Die Kollektoren werden erfindungsgemäß durch ein Druck- oder Pressschweißen, insbesondere durch ein Heißpressschweißen, verbunden oder gefügt. Vorzugsweise werden die Kollektoren beziehungsweise die Anode und die Kathode, während des Festkörperschweißvorgangs auf das Endmaß getrimmt. Erfindungsgemäß wird somit ein Laser- oder Ultraschallschweißen durch ein Druck- oder Heißpressschweißen ersetzt. Dadurch ist ein besonders geeignetes Verfahren zur Herstellung einer Batteriezelle realisiert.

Durch das erfindungsgemäße Verfahren entfällt ein energieintensives Laserschweißen, wodurch der Wärmeeintrag in den Elektrodenstapel beziehungsweise auf die aktiven Schichten (Kathodenschicht, Anodenschicht) reduziert wird. Das Festkörperschweißen des Kollektors führt zu einer Oberflächenschweißung und nicht zu einer Liniennahtschweißung wie beim Laserschweißen, somit ist im Vergleich zu einer Laserschweißnaht eine (groß-)flächige Kontaktierung und Verbindung der Stromableiter ermöglicht, wodurch ohmsche Wärmeverluste im Batteriebetrieb vorteilhaft reduziert werden. Im Gegensatz zum Ultraschallschweißen treten bei dem erfindungsgemäße Druckschweißen keine Vibrationen auf, so dass der Füge- oder Schweißprozess eine Maßgenauigkeit der Batteriezelle nicht negativ beeinflusst.

Des Weiteren wird durch das Druck- oder Heißpressschweißen der einzelnen Ableiterfähnchen oder Stromableiter eine stoffschlüssige Verbindung der Materialien ohne den Einschluss von Partikeln oder Luft ermöglicht, wodurch die Leitfähigkeit der gefügten Kathoden oder Anoden nicht nachteilig beeinflusst wird. Durch den Einsatz des Druck- oder Heißpressschweißens erhöht sich somit also der Stromfluss durch die Kollektoren, wodurch die Leistung der hergestellten Batteriezelle erhöht wird.

Durch das erfindungsgemäße Verfahren ist es weiterhin möglich, bei der Herstellung der Batteriezelle ein zusätzliches Ableitertab mit Vorsiegelband entfallen zu lassen. Mit anderen Worten ist es nicht notwendig, dass die Kollektoren mit einem separaten Ableitertab gefügt werden um eine zu hohe thermische Belastung des Vorsiegelbands zu vermeiden. Dadurch entfällt das Zukaufteil "Ableitertab mit Vorsiegelband", wodurch ein hohes Kosteneinsparungspotential geschaffen wird. Durch das Druck- oder Heißpressschweißen entsteht aus den einzelnen Ableiterfähnchen ein Block, welcher als Ableiter oder Kollektor genutzt werden kann. So ergibt sich neben der Einsparung des "Ableitertabs" auch eine Gewichtsreduzierung der Batteriezelle.

Um eine galvanische Korrosion zu verhindern, werden die Anode und/oder die Kathode nach dem Druck- oder Heißpressschweißen beispielsweise mit einer Schutzschicht versehen. Insbesondere wird auf der Kupferseite, also auf der Anodenseite, unmittelbar nach dem Festkörper- oder Pressschweißen eine Verzinnung aufgebracht. Mit anderen Worten wird die Anode mit einer Zinnschicht als Schutzschicht versehen. Alternativ ist beispielsweise auch eine Nickelbeschichtung der Anode denkbar.

Durch das erfindungsgemäße Druck- oder Heißpressschweißen ist es möglich, die einzelnen Ableiterfähnchen der Elektroden zu einem massiven Block (Kathode, Anode) zu verschweißen. Dies bedeutet, dass die realisierte Schweißverbindung eine hohe mechanische Steifigkeit aufweist. Das Druck- oder Heißpressschweißen realisiert hierbei insbesondere eine Verbindung mit einer besonders hohen Lebensdauer. Grundsätzlich spielt hierbei die Lagenanzahl, also die Anzahl von übereinander gestapelt angeordneten Stromableitern, für das Festkörperschweißen keine Rolle. Jedoch können bei geringen Lagenanzahlen aufgrund des (Füge-)Drucks Risse auf den Ableiterfähnchen beziehungsweise Stromableitern entstehen. In einer geeigneten Ausführung ist es daher vorgesehen, dass die ersten und zweiten Stromableiter in mindestens zehn Lagen, insbesondere in mehr als 20 Lagen, vorzugsweise zwischen 30 und 50 Lagen, angeordnet sind. Mit anderen Worten werden mindestens zehn, insbesondere 20, vorzugsweise zwischen 30 und 50, erste und zweite Stromableiter zu der Kathode beziehungsweise Anode gefügt. Bei diesen Lageanzahlen besteht im Wesentlichen keine Gefahr einer Rissbildung.

Der Prozess Druck- oder Heißpressschweißen ist abhängig von der Oberflächengute (Sauberkeit) der Materialien. Dies bedeutet, dass die Prozess- oder Schweißparameter (Druck, Dauer und Temperatur) von der Oberflächengüte der Fügepartner abhängig ist. Bei einer sauberen Oberfläche benötigt der Schweißprozess weniger Energie. In einer zweckmäßigen Ausgestaltung ist daher eine Vorreinigung der Stromableiter vorgesehen, bei welcher die ersten und zweiten Stromableiter vor der Kontaktierung beziehungsweise vor dem schmelzfreien stoffschlüssigen Fügen gereinigt werden, um eventuell vorhandene Verunreinigungen wie Fette von den Oberflächen zu entfernen.

Mit anderen Worten werden die Stromableiter von Verschmutzungen auf der Oberfläche befreit. Beispielsweise werden die Oberflächen der Stromableiter mittels einer Plasmareinigung von Verschmutzungen befreit. In einer bevorzugten Weiterbildung werden die ersten und zweiten Stromableiter vor dem Festkörperschweißen insbesondere in einem Ultraschallbad gereinigt. Zusätzlich oder alternativ ist es beispielsweise möglich eine mechanische Reinigung der Stromableiter, beispielsweise mittels Bürsten durchzuführen. Dadurch wird sichergestellt, dass möglichst keine Verschmutzungen im Fügebereich vorhanden sind. Durch die sauberen Oberflächen wird die Qualität der Fügeverbindung und somit die Qualität der elektrischen Kontaktierung verbessert.

In einer erfindungsgemäßen Ausführung werden die ersten und zweiten Stromableiter vor dem Fügen beziehungsweise Schweißen erwärmt. Dies bedeutet, dass die Temperatur der Stromab- leiter für das Festkörperschweißen erhöht wird. Bei der Kupferanode der zweiten Stromableiter erfolgt die Vorwärmung beispielsweise auf bis zu 600 °C bis 700 °C, wobei bei der Aluminiunkathode der ersten Stromableiter eine Vorwärmung beispielsweise bis 300 °C bis 350 °C erfolgt. Dadurch ist eine geringere Heizleistung im Zuge des Druck- oder Heißpressschweißens notwendig. Insbesondere reduziert die Vorerwärmung somit eine Prozesszeit des Druck- oder Heißpressschweißens. Beispielsweise wird die Prozesszeit von circa 20 Sekunden auf etwa fünf Sekunden reduziert. In einer denkbaren Weiterbildung werden die ersten und zweiten Stromableiter beispielsweise mit Hilfe einer Spule induktiv (vor-)erwärmt. Alternativ ist es beispielsweise möglich die Vorerwärmung mittels eines Druckstempels zu erzeugen, welcher auf die Stromableiter gedrückt wird, wobei die Erwärmung durch eine Bestromung aufgrund einer Widerstandserwärmung bewirkt wird. Um eine Beschädigung der aktiven Beschichtung der Elektroden zu vermeiden ist es in einer erfindungsgemäßen Ausbildung des Verfahrens weiterhin vorgesehen, dass der Elektrodenstapel während des Füge- oder Schweißvorgangs, insbesondere auch im Zuge der Vorerwärmung, gekühlt wird. Hierzu ist eine Kühlanbindung, also eine thermische Kopplung, des Elektrodenstapels an eine Kühlvorrichtung, insbesondere an eine Kühlungsplatte, vorgesehen. Die Kühlungsplatte kann sich beispielsweise über den gesamten Bereich des Aktivmaterials erstrecken, wobei auch Ausführungen mit kleineren Kühlungsplatten möglich sind.

Um eine Oxidbildung zu vermeiden erfolgt die Vorerwärmung sowie das Druck- oder Heißpressschweißen in einem Schutzgas oder unter Vakuum. Insbesondere ist dabei entscheidend, dass sich kein Sauerstoff in der Umgebung befindet, um eine Oxidbildung zu verhindern. In einer geeigneten Ausgestaltung des Verfahrens wird das Heißpressschweißen in einer Stickstoffatmosphäre, also in einer Stickstoffumgebung, durchgeführt.

Die erfindungsgemäße Vorrichtung ist zur Durchführung eines vorstehend beschriebenen Verfahrens vorgesehen, sowie dafür geeignet und eigerichtet. Dabei gelten die Ausführungen im Zusammenhang mit dem Verfahren sinngemäß auch für die Vorrichtung und umgekehrt.

Die Vorrichtung weist erfindungsgemäß ein Gehäuse und eine darin aufgenommene Stempeleinrichtung mit jeweils einem oberen Druckstempel und einem unteren Druckstempel zum Heißpressschweißen der ersten und zweiten Stromableiter auf. Dies bedeutet, dass für die ersten Stromableiter ein oberer und unterer Druckstempel und für die zweiten Stromableiter ein oberer und unterer Druckstempel vorliegt, so dass die Stromableiter im Wesentlichen zeitgleich zu der Kathode und Anode gefügt werden können. Dadurch ist eine besonders geeignete Vorrichtung zur Herstellung einer Batteriezelle realisiert.

In einer geeigneten Weiterbildung ist in die oberen Druckstempel ein pneumatischer Schneidstempel zum Zuschneiden der Kathode und Anode integriert. Dadurch können die Kollektoren während des Heißpressschweißens auf ein gewünschtes Endmaß getrimmt werden.

Die erfindungsgemäße Batteriezelle ist insbesondere als eine Pouchzelle ausgeführt. Die Batteriezelle ist beispielsweise für eine Anwendung in einer Fahrzeugbatterie eines elektrisch angetriebenen oder antreibbaren Kraftfahrzeugs vorgesehen.

Die Batteriezelle weist einen Elektrodenstapel mit einer Anzahl von ersten und zweiten Stromab-leitern, und ein den Elektrodenstapel aufnehmendes Zellengehäuse auf. Die ersten Stromableiter sind zu einer gemeinsamen Kathode und die zweiten Stromableiter zu einer gemeinsamen Anode schmelzfrei stoffschlüssig gefügt. Das Zellengehäuse weist beispielsweise zwei umlaufend stoffschlüssig gefügte Gehäusehälften auf, aus welchen die Kathode und die Anode zumindest teilweise hinausragen. Die Gehäusehälften weisen im den Bereichen der Kathode und der Anode geeigneterweise jeweils ein Vorsiegelband auf, welches stoffschlüssig mit dem jeweiligen Kollektor gefügt ist. Dadurch ist eine besonders geeignete Batteriezelle realisiert. Die im Hinblick auf das Verfahren und/oder die Vorrichtung angeführten Vorteile und Ausgestaltungen sind sinngemäß auch auf die Batteriezelle übertragbar und umgekehrt.

Nachfolgend sind Ausführungsbeispiele der Erfindung anhand einer Zeichnung näher erläutert. Darin zeigen in schematischen und vereinfachten Darstellungen:
- Fig. 1: ein Flussdiagramm eines erfindungsgemäßen Verfahrens zur Herstellung einer Batteriezelle,
- Fig. 2: eine Batteriezelle,
- Fig. 3: einen Reinigungsprozess des Verfahrens,
- Fig. 4: einen Vorerwärmungsprozess des Verfahrens,
- Fig. 5: einen Heißpressschweißprozess des Verfahrens zur Kontaktierung eines Kollektors, und

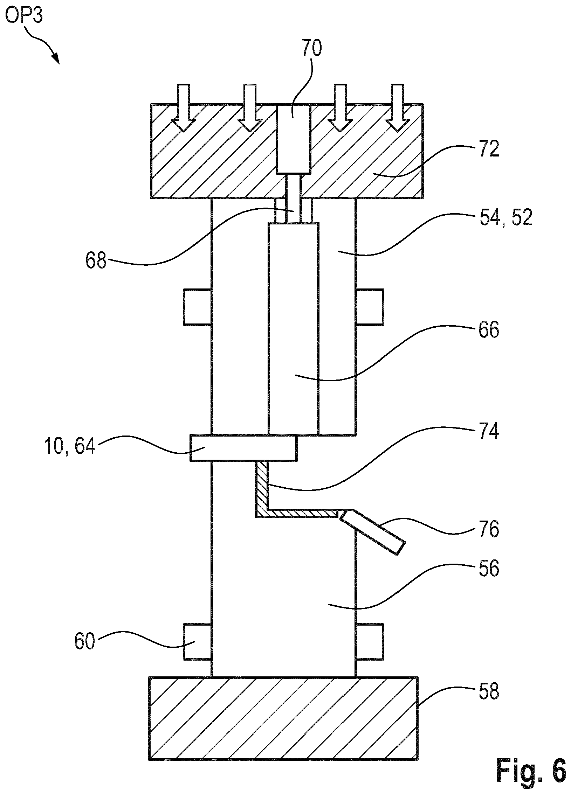

- Fig. 6: einen Abtrennvorgang des Heißpressschweißprozesses.

Einander entsprechende Teile und Größen sind in allen Figuren stets mit den gleichen Bezugszeichen versehen.

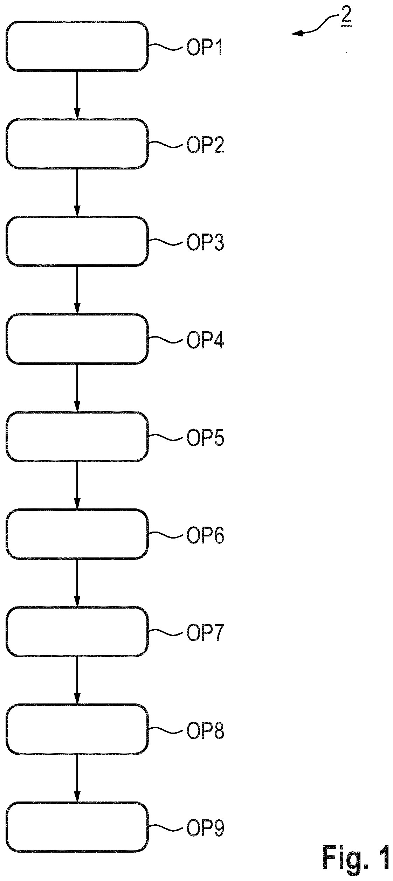

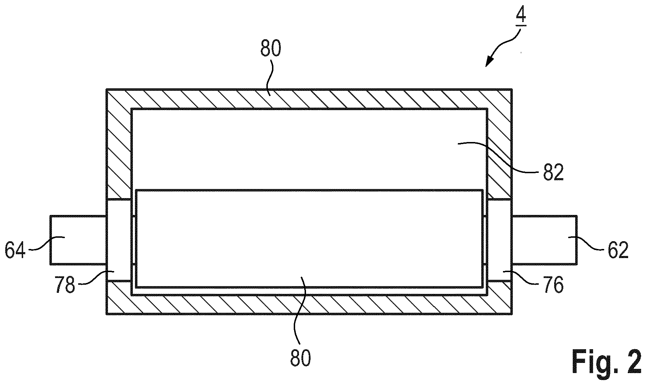

Die Fig. 1 zeigt in einem schematischen und vereinfachten Flussdiagramm ein erfindungsgemäßes Verfahren 2 zur Herstellung einer Batteriezelle 4 (Fig. 2). Das nachfolgend anhand der Figuren 2 bis 5 beschriebene Verfahren weist in dieser Ausführung beispielsweise neun aufeinanderfolgende Verfahrensschritte OP1, ..., OP9 auf. Eine nicht näher bezeichnete Vorrichtung zur Durchführung des Verfahrens 2 beziehungsweise der Verfahrensschritte OP1, ..., OP9 ist nachfolgend ebenfalls anhand der Figuren 2 bis 5 näher erläutert.

Die Batteriezelle 4 weist einen Elektroden- oder Zellenstapel 6 mit eine Anzahl von übereinander gestapelt angeordneten Dünnschichtzellen mit einer Kathodenschicht und mit einer Anoden-schicht sowie mit einer dazwischen eingebrachten Separatorschicht (Separator) auf. Hierbei ist beispielsweise eine Aktivmaterial- oder Elektrodenmaterialschicht auf jeweils einen Stromableiter 8, 10 aufgetragen. Die Stromableiter 8, 10 sind beispielsweise als Metallfolien ausgeführt, wobei geeigneterweise Kupferfolien für die Anodenschichten und Aluminiumfolien für die Kathoden-schichten eingesetzt werden. Die Stromableiter 8, 10 stehen dem Elektrodenstapel 6 randseitig als Ableiterfahnen oder Elektrodenableiterfähnchen über. Nachfolgend sind unter den Stromableitern 8 insbesondere Aluminiumfolien und unter den Stromableitern 10 insbesondere Kupferfolien zu verstehen.

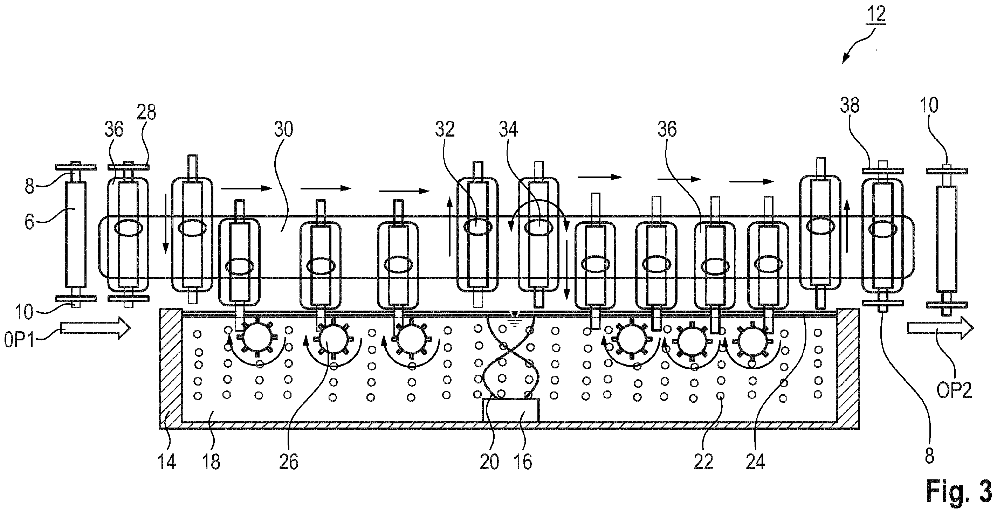

Die Fig. 3 zeigt in aufeinanderfolgenden Darstellungen den Verfahrensschritt OP1 des Verfahrens 2. In dem Verfahrensschritt OP1 erfolgt eine Oberflächenreinigung der Stromableiter 8, 10 mittels Ultraschall. Bei der Oberflächenreinigung werden Oxide, Feuchtigkeit und ölige Produkte von der Oberfläche der Stromableiter 8, 10 entfernt.

Die Vorrichtung weist hierfür einen Ultraschallreiniger 12 mit einem Ultraschallbad 14 auf. In dem Ultraschallbad 14 ist ein Ultraschallgenerator 16 für Frequenzen bis 40 kHz (Kilohertz) angeordnet, wobei das Ultraschallbad 14 mit einer Flüssigkeit 18 gefüllt ist. Die Flüssigkeit 18 ist beispielsweise destilliertes Wasser mit alkalischen Lösungsmittel oder Zusätzen für eine Oxidreinigung. Im Betrieb erzeugt der Ultraschallgenerator 16 eine Ultraschallwelle 20, welche im Be-reich der eingetauchten Stromableiter 8, 10 die größte Amplitude aufweist. Die Ultraschallwelle 20 erzeugt in der Flüssigkeit 18 schnell bewegte Kavitationsblasen 22, welche sich mit der Ultraschallfrequenz bewegen und Schmutz und ölige Substanzen von den Oberflächen der Stromab-leiter 8, 10 entfernen. Die alkalische Zusätze der Flüssigkeit 18 helfen, Oxide auf der Oberflächen zu entfernen.

Das Ultraschallbad 14 ist mit einem Deckel 24 abgedeckt. Der Deckel 24 ist aus einem Gummi hergestellt und weist Schlitze zur Führung der Stromableiter 8, 10 auf. Im Bereich des Deckels 24 sind Reinigungsrollenbürsten 26 mit Polyamidfasern für die mechanische Reinigung der Stromableiter 8, 10 vorgesehen. Die Reinigungsrollenbürsten 26 werden durch den Kontakt mit den Stromableiter 8, 10 bewegt.

Der Elektrodenstapel 6 wird von einem Greifer 28 in einer Führungsplatte 30 für die Ultraschallreinigung fixiert. Der Elektrodenstapel 6 wird mittels der Führungsplatte 30 abgesenkt, so dass der Stromableiter 8 durch den geschlitzten Deckel 24 in das Ultraschallbad 14 eintaucht, und von den Kavitationsblasen 22 und den Reinigungsrollenbürsten 26 gereinigt wird. Anschließend wird der Elektrodenstapel 6 mittels eines Greifers 32 vertikal nach oben bewegt und mittels eines Gelenks 34 um 180° verschwenkt. Anschließend wird der Stromableiter 10 in das Ultraschallbad 14 eingetaucht und gereinigt. Der Elektrodenstapel 6 ist hierbei in einer Schutzabdeckung 36 aufgenommen, so dass möglichst keine Flüssigkeit 18 an den Elektrodenstapel 6 gelangt. Abschließend wird der Elektrodenstapel 6 von einem Greifer 38 von der Führungsplatte 30 entnommen und zu dem Verfahrensschritt OP2 geführt.

Alternativ zu dem vorstehend beschriebenen Verfahrensschritt OP1 ist es beispielsweise denkbar, die Stromableiter 8, 10 mittels eines Plasmas zu reinigen.

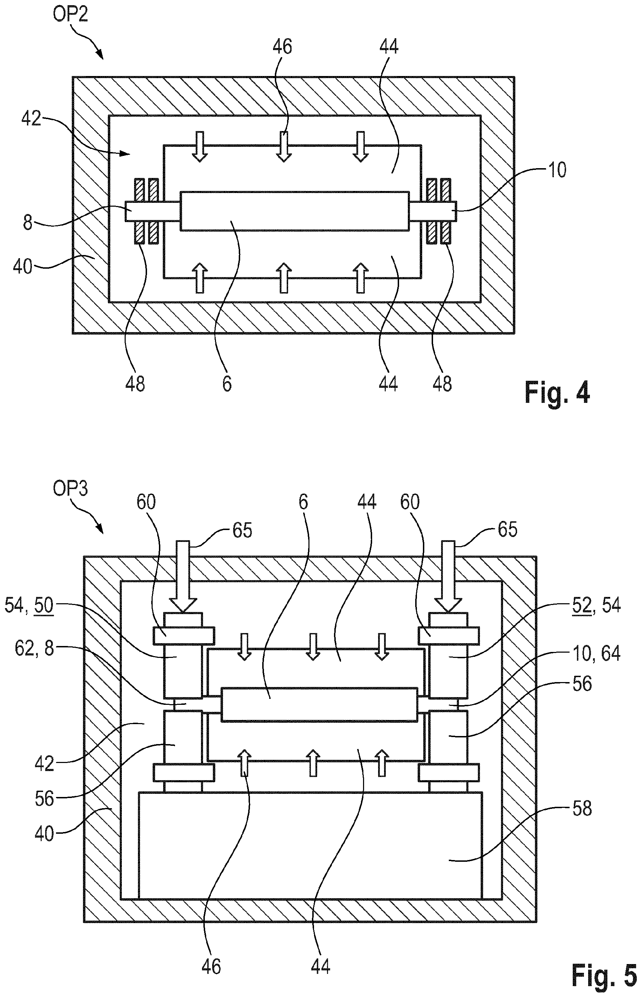

Sobald die Oberfläche gereinigt ist, wird sie in dem Verfahrensschritt OP2 mittels Induktions- oder Widerstandserwärmung unter einer inerten Stickstoffatmosphäre vorgeheizt (Fig. 4). Bei der Widerstandserwärmung werden beispielsweise zwei bestrombare Stempel an die Stromab- leiter 8, 10 gepresst. Die Stempel sind hierbei insbesondere aus Graphit, Titan, oder Wolfram hergestellt.

Bei der Kupferanode der Stromableiter 10 erfolgt die Vorwärmung beispielsweise auf bis zu 600°C. Bei der Aluminiunkathode der Stromableiter 8 erfolgt die Vorwärmung beispielsweise bis 300°C. Hierzu weist die Vorrichtung eine Heizkammer als Gehäuse 40 auf. Die Heizkammer 40 weist in ihrem Inneren ein Gas 42 auf.

Das inerte Gas 42 ist beispielsweise als Stickstoff ausgeführt, und unter einem Überdruck von zum Beispiel 15 mbar (Millibar) in die Heizkammer 40 eingebracht. Um eine unerwünschter Erwärmung des Elektrodenstapels 6 zu vermeiden sind zwei Kühlungsplatten 44 vorgesehen. Die Kühlungsplatten 44 werden mittels eines Greifers 46 mit einer als Pfeile dargestellten Klemmkraft beidseitig gegen den Elektrodenstapel 6 gepresst, so dass der Elektrodenstapel 6 während der Vorerwärmung auf eine Temperatur von maximal 50 °C temperiert wird. Die Kühlung der Kühlungsplatten 44 erfolgt durch eine Wasser und Glykolsuspension, wobei die Temperierung anhand der Wasserkühlrate eingestellt oder geregelt wird.

Die Stromableiter 8, 10 werden mittels jeweils einer Heizvorrichtung 48 vorerwärmt. Die Heizvor-richtung 48 erwärmt die Stromableiter 8, 10 beispielsweise über Induktion oder über einen elektrischen (Heiz-)Widerstand.

Nach dem Vorheizen oder Vorerwärmen werden die Stromableiter 8, 10 in dem Verfahrensschritt OP3 innerhalber der Heizkammer 40 mit jeweils einer beheizten Stempeleinrichtung 50, 52 gedrückt (Fig. 5). Die Stempeleinrichtungen 50, 52 weisen jeweils einen beweglichen (Druck-)Stempel 54 und einen festen Stempel 56 als Gegenlager auf. Die Stempel 56 sind an einer Basisplatte 58 abgestützt. Sowohl der feststehende als auch der bewegliche Stempel 54, 56 werden durch Heizpatronen 60 erwärmt, die in eine Keramikabdeckung oder einen Keramikmantel eingebettet sind. Die Stempel 54, 56 sind für niedrige Drücke beispielsweise aus Graphit und für hohe Drücke aus Carbid und/oder Titanium hergestellt.

Der Stempel 54 der Stempeleinrichtung 50 wird insbesondere auf eine Temperatur zwischen 350 °C bis 600 °C, beispielsweise auf bis zu 400 °C, erwärmt und erzeugt einen Druck von beispielsweise 4 bar bis 6 bar auf die Stromableiter 8. Der Stempel 54 der Stempeleinrichtung 52 wird insbesondere auf eine Temperatur zwischen 550 °C und 750 °C, beispielweise auf bis zu 700 °C, erwärmt und erzeugt einen Druck von beispielsweise 6 bar bis 7 bar auf die Stromableiter 10.

Auf der Kupferseite des Stromableiters 10 beträgt die Temperatur vorzugsweise 500 °C bis 700 °C, wobei bei niedrigeren Temperaturen ein höherer Druck erforderlich ist. Die Stempel 54 sind beispielsweise als pneumatische Zylinder ausgeführt, welche die notwendige Kraft für das Schweißen erzeugen. Der Stempel 54 oder Pneumatikzylinder benötigt für das Schweißen von Kupfer für 700 °C etwa 4 bar Luftdruck. Bei 550 °C benötigt man circa 6 bar Luftdruck. Dies bedeutet, dass in diesem Temperaturbereich ein normaler industrieller Luftdruck zum Druckschweißen ausreicht. Für das Schweißen der Aluminiumseite des Stromableiters 8 wird vorzugsweise ein Temperaturbereich von 400 bis 600 °C verwendet. Bei 400 °C benötigt man etwa 6 bar Luftdruck im Pneumatikzylinder, wobei bei 600 °C circa 4 bar Luftdruck benötigt werden.

Der Luftdruck der Pneumatikzylinder oder Stempel 54 ist auch von der Kolbenoberfläche des Pneumatikzylinders abhängig. Größere Pneumatikzylinderkolben benötigen weniger Luftdruck.

Die Temperatur der Stempel 54 ist im Betrieb stets niedriger als die Schmelztemperatur des jeweiligen Stromableitermaterials. Mittels der Stempeleinrichtungen 50, 52 werden die Stromab-leiter 8 zu einer gemeinsamen Kathode 62 und mittels der Stempeleinrichtung 52 werden die Stromableiter 10 zu einer gemeinsamen Anode 64 schmelzfrei stoffschlüssig gefügt. Insbesondere erfolgt hierbei ein Pressschweißen, wobei die für das Pressschweißen erforderliche Kraft 65 anhand der folgenden Formel berechnet wird:
Oberfläche des Kollektors *Fließbeginnspannung (ca. 50 MPa) * Faktor (5 bis 10)

Geeigneterweise werden die Stromableiter 8, 10 auf eine solche Temperatur geheizt, dass die Fließbeginnspannung etwa gleich ist, wodurch die Stromableiter 8, 10 im Wesentlichen mit einem gleichen Stempeldruck pressgeschweißt werden können. Bei 700° für Kupfer und 400° für Aluminium liegt die Fließbeginnspannung bei etwa 50 MPa. Beim Schweißen kommt es zu einer Dickenverformung von etwa 2%. Die zum Schweißen erforderliche Kraft ist Fließspannung mal Schweißfläche mal Korrekturfaktor. Der Korrekturfaktor beträgt normalerweise 3 bis 5, abhängig von der Oberflächenbeschaffenheit. Da Aluminiumoxid schwer zu schweißen ist, kann man die Schweißtemperatur für Aluminium auf 600°C erhöhen. Das Pressschweißen wird auch unter der inerten Stickstoffatmosphäre des Gases 42 durchgeführt. Der Elektrodenstapel 6 wird wie im Verfahrensschritt OP2 durch die Kühlungsplatten auf unter 50 °C gekühlt. Während des Press-schweißens werden die Kollektoren 62, 64 drei bis fünf Sekunden lang unter den erhitzten Stempeln 54, 56 gehalten.

Bei dem Pressschweißen verformt sich das Material der Kollektoren 62, 64 um maximal 5 %. Aufgrund der Scherverformung bricht die verbleibende Oxidschicht auf, und es kommt zu atomarem Kontakt zwischen den Verbindungsmetallen. Das Material wird hierbei durch das Feststoffdiffusionsverfahren geschweißt. Wesentlich ist, dass das Material bei diesem Schweißvorgang nicht geschmolzen wird, und sich daher keine intermetallische Verbindungen in den Kollektoren 62, 64 ausbilden.

Anschließend werden die gefügten Kollektoren 62, 64 nach Beendigung des Pressschweißens ebenfalls getrimmt. Das in Fig. 5 für die Anode 64 dargestellte Trimmen erfolgt im gleichen Hub wie beim Pressschweißen, wobei die Kollektorabmessungen innerhalb der Toleranzgrenzen liegen. Da das Trimmen bei höherer Temperatur des gefügten Metalls erfolgt, ist vorteilhafterweise weniger Schnittkraft erforderlich.

Der Stempel 54 weist hierbei einen integrierten Schneidstempel 66 zur Abtrennung oder Trimmung der Anode 64 auf. Der Schneidstempel 66 ist mit einer Pneumatik mit einem Federkolben 68 und mit einem Federzylinderkopf 70 gekoppelt, wobei der Federzylinderkopf 70 mit dem Stempel 54 an einem Pressstößel 72 gelagert ist. Der Stempel 56 ist mit einer Schneidmatrize 74 als Gegenlager für den Schneidstempel 66 ausgeführt, welche mit einer Abfallrutsche 76 für das abgetrennte Material versehen ist.

Anschließend wird ein optionaler Verfahrensschritt OP4 durchgeführt. Hierbei wird eine Schutzbeschichtung auf die Anode 64 als Korrosionsschutz aufgebracht. Der optionale Verfahrensschritt OP4 verbessert die Leitfähigkeit und realisiert einen galvanischen Korrosionsschutz der Anode 64. Nach dem Trimmvorgang wird die Anode beziehungsweise der Kupferkollektor 64 in ein geschmolzenes Zinnbad getaucht. Anstelle einer Zinnbeschichtung ist beispielsweise auch eine Nickelbeschichtung denkbar.

Nach dem Verfahrensschritt OP4 werden die Elektrodenstapel 4 in tiefgezogene Beutel oder Gehäusehälften (Beutelhalbschale) gelegt. An der als Tiefziehbeutel ausgeführten Gehäusehälfte sind zwei Vorsiegelbänder 76, 78 im Bereich der Kollektoren 62, 64 angebracht. Die Bereitstellung der Vorsiegelbänder erfolgt geeigneterweise in einem Verfahrensschritt OP5.

In dem Verfahrensschritt OP6 erfolgt beispielsweise ein Tiefziehprozess, mit welchem eine Aluminium-Verbundfolie in die Gehäusehälfte tiefgezogen wird, wobei in dem Verfahrensschritt OP7 insbesondere die bereitgestellten Vorsiegelbänder 76, 78 auf der Gehäusehälfte vorfixiert werden.

In dem nicht näher dargestellten Verfahrensschritt OP8, wird der Elektrodenstapel 6 zwischen zwei mit Vorsiegelbändern 106, 108 bestückte Gehäusehälften eingesetzt. Anschließend werden die Gehäusehälften im Bereich von randseitigen Flanschen in Kontakt gebracht und mittels eines Heißsiegelverfahrens stoffschlüssig zu einem Zellengehäuse 80 gefügt oder versiegelt. Dadurch kann ein Ableitertab, auf welchem das Vorsiegelband herkömmlicherweise angeordnet ist, eingespart werden. Dies bedeutet, dass das Druckschweißen der Stromableiterfolien die Verwendung eines Ableitertabs überflüssig macht.

Wie in der Fig. 2 vergleichsweise deutlich ersichtlich ist, ist der Elektrodenstapel 6 vollständig in dem Zellengehäuse 80 aufgenommen, wobei lediglich die Anode 64 und die Kathode 62 aus dem Zellengehäuse 80 ragen. Der Elektrodenstapel 6 ist hierbei im Wesentlichen in einer Hälfte des Zellengehäuses 80 angeordnet, wobei die andere Hälfte als Freiraum oder Gastasche 82 wirkt, um als Puffervolumen im Betrieb entstehende Gase aufzunehmen.

Der Heißsiegelprozess bewirkt einen umlaufenden Dichtrand durch die stoffschlüssige Verbindung der Flansche der Gehäusehälften. Im Bereich der Vorsiegelbänder 76, 78 wird eine stoffschlüssige Verbindung zwischen den Gehäusehälften und einer jeweiligen Kunststoffschicht bewirkt. In dem Verfahrensschritt OP9 wird eine Metallschicht der Vorsiegelbänder 76, 78 mit der metallischen Anode 64 beziehungsweise Kathode 62 stoffschlüssig verschweißt oder verbunden.

Das Schweißen erfolgt insbesondere durch elektromagnetisches Pulsschweißen (EMP-Schweißen). Alternativ ist es auch möglich, eine externe Bewegungsvorrichtung zu verwenden, welche mit hoher Geschwindigkeit bewegt wird und durch Aufprall eine Verschweißung des Vorsiegelbandes 78 mit dem Kollektor 64 erzeugt. Die externe Vorrichtung wird durch induzierte Magnetfelder bewegt. Anstelle des EMP-Schweißens ist auch ein Ultraschallschweißen möglich. Ultraschallschweißen kann auch Polypropylen verbinden. Wenn Ultraschallschweißen verwendet wird, kann man den Heißsiegelvorgang vermeiden. Durch Ultraschallschweißen werden die Gehäusehälften miteinander und mit den Kunststoffschichten sowie auch die Metallschichten der Vorsiegelbänder 76, 78 und die Kollektoren 62, 64 verbunden. Es ist wichtig, dass nach dem Ultraschallschweißen die Festigkeit der Schweißnaht unter Vibrationsbelastung überprüft wird.

Die Verfahrensschritte OP8 und OP9 sind beispielsweise austauschbar. Mit anderen Worten kann die Reihenfolge von OP8 und OP9 vertauscht werden, und zunächst ein EMP-Schweißen zur stoffschlüssigen Verbindung der Vorsiegelbänder 76, 78 mit den Kollektoren 62, 64 und anschließend ein Heißsiegelverfahren zur stoffschlüssigen Verbindung der Gehäusehälften erfolgen.

Bei einer Batteriezelle 4 mit einem Flüssigelektrolyten wird dieser vorzugsweise während dem Verfahrensschritt OP8 oder OP9 in die Gastasche 82 eingefüllt bevor das Zellengehäuse 80 im Bereich des Kollektors vollständig verschlossen und abgedichtet ist.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen.

### Bezugszeichenliste

| | | | |
|---|---|---|---|
| 2 | Verfahren | 44 | Kühlungsplatte |
| 4 | Batteriezelle | 46 | Greifer |
| 6 | Elektrodenstapel | 48 | Heizvorrichtung |
| 8 | Stromableiter (Kathode) | 50, 52 | Stempeleinrichtung |
| 10 | Stromableiter (Anode) | 54, 56 | Stempel |
| 12 | Ultraschallreiniger | 58 | Basisplatte |
| 14 | Ultraschallbad | 60 | Heizpatrone |
| 16 | Ultraschallgenerator | 62 | Kathode, Kollektor |
| 18 | Flüssigkeit | 64 | Anode, Kollektor |
| 20 | Ultraschallwelle | 65 | Kraft |
| 22 | Kavitationsblase | 66 | Schneidstempel |
| 24 | Deckel | 68 | Federkolben |
| 26 | Reinigungsrollenbürste | 70 | Federzylinderkopf |
| 28 | Greifer | 72 | Pressstößel |
| 30 | Führungsplatte | 74 | Schneidmatrize |
| 32 | Greifer | 76 | Vorsiegelband (Kathode) |
| 34 | Gelenk | 78 | Vorsiegelband (Anode) |
| 36 | Schutzabdeckung | 80 | Zellengehäuse |
| 38 | Greifer | 82 | Gastasche |
| 40 | Heizkammer | | |
| 42 | Gas | OP1...OP9 | Verfahrensschritt |

## Patentansprüche

1. Verfahren (2) zur Herstellung einer Batteriezelle (4), aufweisend einen Elektrodenstapel (6) mit einer Anzahl von ersten und zweiten Stromableitern (8, 10), welche in Lagen übereinander gestapelt angeordnet sind,
- wobei die ersten Stromableiter (8) zu einer gemeinsamen Kathode (62) und die zweiten Stromableiter (10) zu einer gemeinsamen Anode (64) mittels Heißpressschweißen schmelzfrei stoffschlüssig gefügt werden,
- wobei die ersten und zweiten Stromableiter (8, 10) vor dem Fügen erwärmt werden, und
- wobei der Elektrodenstapel (6) während der Vorerwärmung und während des Fügevorgangs gekühlt wird.

2. Verfahren (2) nach Anspruch 1,
**dadurch gekennzeichnet,**
**dass** die ersten und zweiten Stromableiter (8, 10) in mindestens zehn Lagen, insbesondere mehr als 20 Lagen, vorzugsweise zwischen 30 und 50 Lagen, angeordnet sind.

3. Verfahren (2) nach Anspruch 1 oder 2,
**dadurch gekennzeichnet,**
**dass** die ersten und zweiten Stromableiter (8, 10) vor dem Fügen gereinigt werden.

4. Verfahren (2) nach Anspruch 3,
**dadurch gekennzeichnet,**
**dass** die ersten und zweiten Stromableiter (8, 10) in einem Ultraschallbad (14) gereinigt werden.

5. Verfahren (2) nach einem der Ansprüche 1 bis 4,
**dadurch gekennzeichnet,**
**dass** die ersten und zweiten Stromableiter (8, 10) vor dem Fügen induktiv erwärmt werden.

6. Verfahren (2) nach einem der Ansprüche 1 bis 5,
**dadurch gekennzeichnet,**
**dass** das Heißpressschweißen in einer Stickstoffatmosphäre durchgeführt wird.

7. Vorrichtung zur Durchführung eines Verfahrens (2) nach einem der Ansprüche 1 bis 6, aufweisend
- ein Gehäuse (40),
- eine im Gehäuse (40) aufgenommene Stempeleinrichtung (50, 52) mit jeweils einem oberen Druckstempel (54) und einem unteren Druckstempel (56) zum Heißpressschweißen der ersten und zweiten Stromableiter (8, 10),
- eine Heizvorrichtung (48) zur Vorerwärmung der ersten und zweiten Stromableiter (8, 10), und
- eine Kühlvorrichtung (44) zur Kühlung des Elektrodenstapels (6).

8. Vorrichtung nach Anspruch 7,
**dadurch gekennzeichnet,**
**dass** in die oberen Druckstempel (54) ein pneumatischer Schneidstempel (66) zum Zuschneiden der Kathode (62) und Anode (64) integriert ist.

9. Batteriezelle (4), insbesondere Pouchzelle, aufweisend einen Elektrodenstapel (6) mit einer Anzahl von ersten und zweiten Stromableitern (8, 10), und ein den Elektrodenstapel (6) aufnehmendes Zellengehäuse (80), wobei die ersten Stromableiter (8) zu einer gemeinsamen Kathode (62) und die zweiten Stromableiter (10) zu einer gemeinsamen Anode (64) mittels Druckschweißen gefügt sind.

## Claims

1. Method (2) for producing a battery cell (4), comprising an electrode stack (6) having a number of first and second current conductors (8, 10) arranged in layers stacked one above another,
- wherein the first current conductors (8) are joined to form a common cathode (62) and the second current conductors (10) are joined to form a common anode (64) in a materially bonded manner without melting by means of hot pressure welding,
- wherein the first and second current conductors (8, 10) are heated before joining, and
- wherein the electrode stack (6) is cooled during preheating and during the joining process.

2. Method (2) according to Claim **1,**
**characterized**
**in that** the first and second current conductors (8, 10) are arranged in at least ten layers, in particular more than 20 layers, preferably between 30 and 50 layers.

3. Method (2) according to Claim 1 or **2,**
**characterized**
**in that** the first and second current conductors (8, 10) are cleaned before joining.

4. Method (2) according to Claim **3,**
**characterized**
**in that** the first and second current conductors (8, 10) are cleaned in an ultrasonic bath (14).

5. Method (2) according to any of Claims 1 to 4,
**characterized**
**in that** the first and second current conductors (8, 10) are inductively heated before joining.

6. Method (2) according to any of Claims 1 to 5,
**characterized**
**in that** the hot pressure welding is carried out in a nitrogen atmosphere.

7. Device for carrying out a method (2) according to any of Claims 1 to 6, comprising
- a housing (40),
- a stamping unit (50, 52) accommodated in the housing (40) and having in each case an upper pressure stamp (54) and a lower pressure stamp (56) for the hot pressure welding of the first and second current conductors (8, 10),
- a heating device (48) for preheating the first and second current conductors (8, 10), and
- a cooling device (44) for cooling the electrode stack (6).

8. Device according to Claim 7,
**characterized**
**in that** a pneumatic cutting punch (66) for cutting the cathode (62) and anode (64) to size is integrated into the upper pressure stamps (54).

9. Battery cell (4), in particular pouch cell, comprising an electrode stack (6) having a number of first and second current conductors (8, 10), and a cell housing (80) accommodating the electrode stack (6), wherein the first current conductors (8) are joined to form a common cathode (62) and the second current conductors (10) are joined to form a common anode (64) by means of pressure welding.

## Revendications

1. Procédé (2) permettant de fabriquer une cellule de batterie (4), présentant un empilement d'électrodes (6) pourvu d'un certain nombre de premiers et deuxièmes conducteurs (8, 10) qui sont disposés en couches les uns au-dessus des autres,
- dans lequel les premiers conducteurs (8) sont assemblés en une cathode commune (62) et les deuxièmes conducteurs (10) sont assemblés en une anode commune (64) par liaison de matière sans fusion au moyen d'un soudage par pression à chaud,
- dans lequel les premiers et deuxièmes conducteurs (8, 10) sont chauffés avant l'assemblage, et
- dans lequel l'empilement d'électrodes (6) est refroidi pendant le préchauffage et pendant l'opération d'assemblage.

2. Procédé (2) selon la revendication 1,
**caractérisé**
**en ce que** les premiers et deuxièmes conducteurs (8, 10) sont disposés en au moins dix couches, en particulier en plus de 20 couches, de préférence entre 30 et 50 couches.

3. Procédé (2) selon la revendication 1 ou 2,
**caractérisé**
**en ce que** les premiers et deuxièmes conducteurs (8, 10) sont nettoyés avant l'assemblage.

4. Procédé (2) selon la revendication 3,
**caractérisé**
**en ce que** les premiers et deuxièmes conducteurs (8, 10) sont nettoyés dans un bain à ultrasons (14).

5. Procédé (2) selon l'une quelconque des revendications 1 à 4,
**caractérisé**
**en ce que** les premiers et deuxièmes conducteurs (8, 10) sont nettoyés par induction avant l'assemblage.

6. Procédé (2) selon l'une quelconque des revendications 1 à 5,
**caractérisé**
**en ce que** le soudage par pression à chaud est effectué dans une atmosphère d'azote.

7. Dispositif permettant d'exécuter un procédé (2) selon l'une quelconque des revendications 1 à 6, présentant
- un boîtier (40),
- un dispositif de poinçonnage (50, 52) reçu dans le boîtier (40), comprenant respectivement un poinçon de pression supérieur (54) et un poinçon de pression inférieur (56) pour le soudage par pression à chaud des premiers et des deuxièmes conducteurs (8, 10),
- un dispositif de chauffage (48) pour le préchauffage des premiers et deuxièmes conducteurs (8, 10), et
- un dispositif de refroidissement (44) pour refroidir l'empilement d'électrodes (6).

8. Dispositif selon la revendication 7,
**caractérisé**
**en ce qu'**un poinçon d'ébavurage pneumatique (66) est intégré dans le poinçon de pression (54) pour découper la cathode (62) et l'anode (64).

9. Cellule de batterie (4), en particulier cellule de poche, présentant un empilement d'électrodes (6) pourvu d'un certain nombre de premiers et deuxièmes conducteurs (8, 10), et un boîtier de cellule (80) recevant l'empilement d'électrodes (6), dans lequel les premiers conducteurs (8) sont assemblés en une cathode commune (62) et les deuxièmes conducteurs (10) sont assemblés en une anode commune (64) au moyen d'un soudage par pression à chaud.
